# EUROPEAN PATENT APPLICATION

(11) **EP 2 258 879 A1**
(43) Date of publication of application: **08.12.2010**
(21) Application number: 09721487.8
(22) Date of filing: 17.03.2009
(51) Int. Cl.: C21B 5/00, B01D 53/04, B01D 53/06, B01D 53/14, B01D 53/62

(54) **METHOD OF SEPARATING BLAST FURNACE GAS**

(30) Priority: 18.03.2008 JP 2008069108; 18.03.2008 JP 2008069109
(71) Applicant: JFE Steel Corporation, Tokyo, 100-0011 (JP)
(72) Inventor: NAKAGAWA, Tsuguhiko, Kawasaki-shi Kanagawa 2100855 (JP); HARAOKA, Takashi, Kawasaki-shi Kanagawa 210-0855 (JP); KISHIMOTO, Akira, Kawasaki-shi Kanagawa 210-0855 (JP); NASU, Masaru, Kawasaki-shi Kanagawa 210-0855 (JP); IDA, Hiroyuki, Kawasaki-shi Kanagawa 210-0855 (JP)
(74) Representative: HOFFMANN EITLE
(86) International application number: PCT/JP2009/055719
(87) International publication number: WO 2009/116672

(57) **Abstract**

A method for separating a blast furnace gas includes the steps of: producing oxygen-enriched air having an oxygen concentration of at least 25 vol%, blowing the oxygen-enriched air into a blast furnace through a tuyere provided in a lower part of the blast furnace, and generating a reformed blast furnace gas by separating and removing carbon dioxide and nitrogen in a blast furnace gas discharged from a blast furnace top.

## Description

### FIELD OF THE INVENTION

The present invention relates to a method for separating and removing carbon dioxide and nitrogen contained in a blast furnace gas discharged from a blast furnace top to use the blast furnace gas as a fuel gas or reducing gas.

### DESCRIPTION OF THE RELATED ARTS

Blast furnace gas discharged from the furnace top of a blast furnace for manufacturing molten iron by reducing iron ore has been effectively used as a fuel gas for hot stove and coke oven and as a fuel gas for power generation in an integrated steel works.

However, the blast furnace gas has a composition of carbon monoxide: 21.1 to 26.2 vol%, carbon dioxide: 19.3 to 23.2 vol%, hydrogen: 2.9 to 5.3 vol%, and nitrogen: 52.5 to 59.2 vol%, contains little combustible gas components, and has a low heating value of 3031 to 3784 kJ (723 to 903 kcal/Nm³) (refer to Handbook of Steel and Iron, 4th edition (CD-ROM), No. 1, vol. 2, iron and steel making, published July 30, 2002, Table 42-5•7 (2000)). Thus, when the blast furnace gas alone is used as a fuel gas, the combustion gas temperature is low and thus the blast furnace gas is not suited to high-temperature usages. This is because the amounts of combustible gas components such as hydrogen, carbon monoxide, and methane are low, and the heat generated by the combustion of these combustible gas components is used to increase the temperature of the inert gas components, such as nitrogen and carbon dioxide, other than the combustible gas components. Thus, the blast furnace gas is mixed with a high-calorie by-product gas having a heating value of 2000 kcal/Nm³ or more, such as coke oven gas or converter gas which is also a by-product gas of steelworks as with the blast furnace gas, and used in the aforementioned usages. Gas obtained by mixing the blast furnace gas and coke oven gas and/or converter gas is called mixed gas or M gas.

Regarding the amounts of by-product gases generated in the steelworks, the amount of blast furnace gas generated is notably larger than those of other by-product gases. In order to use the blast furnace gas, large quantities of coke oven gas and converter gas are consumed as the gas for carburetion. In particular, recently, operation of blast furnaces is switching from oil injection to pulverized coal injection and thus the amount of blast furnace gas generated tends to increase. As the amount of blast furnace gas generated increases, the consumption of high-calorie by-product gas for carburetion also increases. Thus, deficiency of high-calorie by-product gas that has been used in heating furnaces in the downstream of the steelworks has become a concern. Fuels obtained by purchasing, such as LPG and LNG, are used as the alternative for the high-calorie by-product gas.

Thus, a number of proposals have been made to reform the blast furnace gas to increase the heating value so that the blast furnace gas can be used alone.

Japanese Unexamined Patent Application Publication No. 2004-309067 proposes separation and removal of carbon dioxide from a blast furnace gas discharged from a blast furnace top to produce a reformed blast furnace gas having a heating value of 900 kcal/Nm³ or higher and that this reformed blast furnace gas is used as a substitute for all or part of at least one of blast furnace gas, coke oven gas, converter gas, and LPG gas. Japanese Unexamined Patent Application Publication No. 2004-309067 proposes that the reformed blast furnace gas is also used as a reducing gas for reducing iron ore in a reducing furnace.

Japanese Unexamined Patent Application Publication No. 55-113814 proposes that a reformed blast furnace gas manufactured by removing carbon dioxide from a blast furnace gas is heated and injected into a blast furnace so that the blast furnace gas can be recycled.

Japanese Unexamined Patent Application Publication No. 62-193622 proposes a method for manufacturing a carbon monoxide- and hydrogen-rich gas by respectively and selectively separating carbon dioxide and nitrogen contained in a blast furnace gas by adsorption using an alumina-based adsorbent and a porous polystyrene.

However, these known techniques have the following problems.

According to Japanese Unexamined Patent Application Publication Nos. 2004-309067 and 55-113814, only carbon dioxide is separated and removed from the blast furnace gas and nitrogen, which accounts for about 50 vol% of the blast furnace gas, is left unremoved. The heating value after modification is only about 1050 kcal/Nm³ at best. The increase in heating value is small and the effects achieved by modification are little.

Japanese Unexamined Patent Application Publication No. 62-193622 discloses manufacture of carbon monoxide- and hydrogen-rich gas by removing carbon dioxide and nitrogen from the blast furnace gas. However, the heating value of the carbon monoxide- and hydrogen-rich gas of Example in the Japanese Unexamined Patent Application Publication No. 62-193622 is less than 1000 kcal/Nm³. It is unlikely that carbon dioxide and nitrogen are sufficiently removed. Moreover, the nitrogen content in the blast furnace gas before separation and removal of carbon dioxide and nitrogen is as high as 55 vol% and the amount of blast furnace gas to be treated is large. Thus, the cost for separating and removing carbon dioxide and nitrogen is high. The same problem occurs with Japanese Unexamined Patent Application Publication Nos. 2004-309067 and 55-113814.

### SUMMARY OF THE INVENTION

It is an object of the present invention to provide a method for separating a blast furnace gas by which carbon dioxide and nitrogen can be separated efficiently at a low cost from a blast furnace gas discharged from a blast furnace top.

To achieve the object, the present invention proposes a method for separating a blast furnace gas which can be summarized as follows.
[1]. A method for separating a blast furnace gas, the method including the steps of:
   producing oxygen-enriched air having an oxygen concentration of at least 25 vol%;
   blowing the oxygen-enriched air into a blast furnace through tuyeres provided in a lower part of the blast furnace; and
   generating a reformed blast furnace gas by separating and removing carbon dioxide and nitrogen in a blast furnace gas discharged from a blast furnace top.
[2]. The method for separating a blast furnace gas according to [1] wherein the oxygen-enriched air has an oxygen concentration of 25 to 96 vol%.
[3]. The method for separating a blast furnace gas according to [1], wherein the reformed blast furnace gas has a heating value of 1060 to 2950 kcal/Nm³.
[4]. The method for separating a blast furnace gas according to [1], wherein
   the oxygen-enriched air an oxygen concentration of 25 to 96 vol%, and
   the reformed blast furnace gas has a heating value of 1060 to 2950 kcal/Nm³.
[5]. The method for separating a blast furnace gas according to [1], wherein
   the step of generating the oxygen-enriched air includes:
   preparing a cylindrical container that is rotatable about a center axis and contains a nitrogen-absorbing adsorbent having a nitrogen adsorption that increases with an increase in pressure or a decrease in temperature;
   supplying dry airs having different pressures and temperatures to the nitrogen-absorbing adsorbent, the dry airs being supplied in directions opposite to each other;
   conducting a denitrification treatment on an air having a relatively high pressure or a relatively low temperature; and
   conducting nitrogen enrichment on an air having a relatively low pressure or a relatively high temperature
   so as to conduct oxygen enrichment on the air having the relatively high pressure or the relatively low temperature.
[6]. The method for separating a blast furnace gas according to [1], wherein the step of generating the reformed blast furnace gas includes the steps of:
   separating and removing carbon dioxide by an amine method,
      and
   separating and removing nitrogen by a PSA method.
[7]. The method for separating a blast furnace gas according to [1], wherein the step of generating the reformed blast furnace gas includes the steps of:
   separating and removing carbon dioxide by a PSA method,
      and
   separating and removing nitrogen by a PSA method.
[8]. The method for separating a blast furnace gas according to [1], wherein the step of generating the reformed blast furnace gas includes using exhaust heat from steelworks to separate and remove carbon dioxide and nitrogen in the blast furnace gas discharged from the blast furnace top.
[9]. The method for separating a blast furnace gas according to [1], further including the step of using the reformed blast furnace gas as a fuel gas for at least one selected from the group consisting of a heating furnace, a soaking furnace, an annealing furnace, and a holding furnace.
[10]. The method for separating a blast furnace gas according to [1], further including the steps of:
   using the reformed blast furnace gas as a fuel gas for at least one selected from the group consisting of a heating furnace, a soaking furnace, an annealing furnace, and a holding furnace; and
   injecting a coke oven gas into the blast furnace.
[11]. The method for separating a blast furnace gas according to [1], further including the step of performing recycling by injecting the reformed blast furnace gas into the blast furnace.
[12]. The method for separating a blast furnace gas according to [1], further including the step of introducing the reformed blast furnace gas serving as a fuel gas into a fuel gas compressor of a gas turbine combined power generation facility and burning the reformed blast furnace gas with a burner of the gas turbine combined power generation facility to generate power.
[13]. The method for separating a blast furnace gas according to [1], further including the steps of:
   introducing the reformed blast furnace gas serving as a fuel gas into a fuel gas compressor of a gas turbine combined power generation facility and burning the reformed blast furnace gas with a burner of the gas turbine combined power generation facility to generate power,
      wherein the step of generating the reformed blast furnace gas includes using exhaust heat of steelworks by utilizing power obtained by an operation method of the gas turbine combined power generation facility so as to separate and remove carbon dioxide and nitrogen in the blast furnace gas discharged from the blast furnace top.
[14]. The method for separating a blast furnace gas according to [12], further including the step of supplying power generated by an operation method of the gas turbine combined power generation facility to facilities of steelworks and using excess power to store carbon dioxide underground or melt iron scraps.
[15]. The method for separating a blast furnace gas according to [12], further including: supplying power generated by an operation method of the gas turbine combined power generation facility to facilities of steelworks, stopping generation of power corresponding to excess power, and injecting into the blast furnace the reformed blast furnace gas or a blast furnace gas having an equivalent heating value to the reformed blast furnace gas needed to generate the excess power.
[16]. A method for separating a blast furnace gas, the method including the steps of:
   generating a reformed blast furnace gas by separating and removing carbon dioxide and nitrogen in a blast furnace gas discharged from a blast furnace top; and
   performing recycling by injecting the reformed blast furnace gas into a blast furnace.
[17]. A method for separating a blast furnace gas, the method including the steps of:
   generating a reformed blast furnace gas by separating and removing carbon dioxide and nitrogen in a blast furnace gas discharged from a blast furnace top; and
   introducing the reformed blast furnace gas serving as a fuel gas into a fuel gas compressor of a gas turbine combined power generation facility and burning the reformed blast furnace gas with a burner of the gas turbine combined power generation facility to generate power.

### BRIEF DESCRIPTION OF THE DRAWINGS

Fig. 1 is a schematic perspective view of a rotary oxygen-enriched air manufacturing apparatus suitable for the present invention.
Fig. 2 includes schematic perspective views of a first cylindrical container and a second cylindrical container which form part of the rotary oxygen-enriched air manufacturing apparatus shown in Fig. 1.
Fig. 3 is a graph qualitatively showing the relationship between nitrogen adsorption of zeolite and pressure.
Fig. 4 is a graph qualitatively showing the relationship between nitrogen adsorption of zeolite, pressure, and temperature.
Fig. 5 is a schematic diagram showing a structure of a gas turbine combined power generation facility according to a third embodiment.

### EMBODIMENTS FOR CARRYING OUT THE INVENTION

### First Embodiment

A method for separating a blast furnace gas according to a first embodiment includes performing a blast furnace operation by injecting oxygen-enriched air having an oxygen concentration of 25 vol% or higher into a blast furnace from a tuyere provided in the lower part of the blast furnace, recovering the blast furnace gas discharged from the blast furnace top by the blast furnace operation, and separating and removing carbon dioxide and nitrogen from the recovered blast furnace gas. The first embodiment will now be described in specific detail.

The gas components and the heating values when carbon dioxide and nitrogen are separated and removed from the blast furnace gas are described. Table 1 shows the gas components and the heating values of a gas (reformed blast furnace gas 1) obtained by completely removing only carbon dioxide from a blast furnace gas containing 4.4 vol% hydrogen (hereinafter also referred to as "H₂"), 49.9 vol% nitrogen (hereinafter also referred to as "N₂"), 23.6 vol% carbon monoxide (hereinafter also referred to as "CO"), and 22.1 vol% carbon dioxide (hereinafter also referred to as "CO₂"), and a gas (reformed blast furnace gas 2) obtained by removing carbon dioxide and nitrogen from the same blast furnace gas. For the reformed blast furnace gas 2, calculation was based on the assumption that 90% of carbon dioxide and 90% of nitrogen can be removed (CO₂: 22.1 vol% → 2.2 vol%, N₂: 49.9 vol% → 5.0 vol%). The volume ratio is the ratio of the volume when the volume of the blast furnace gas is assumed to be 1.0.

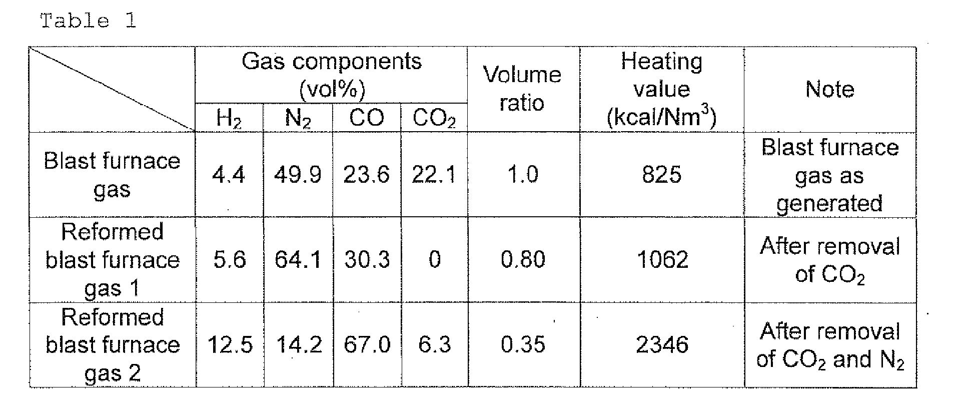

As shown in Table 1, the heating value of the blast furnace gas as generated is 825 kcal/Nm³. When only carbon dioxide is completely removed from the blast furnace gas (reformed blast furnace gas 1), the increase in the combustible gas component content is only about 8 vol% and the total combustible gas component content is only about 36 vol%. The heating value is 1062 kcal/Nm³ and the increase in the heating value is small. In contrast, when 90% of both carbon dioxide and nitrogen are separated and removed (reformed blast furnace gas 2), the total combustible gas component content reaches about 80 vol% and the heating value increases to 2346 kcal/Nm³,

One of the objectives of the first embodiment is to reduce the consumption of the high-calorie by-product gas for carbureting the blast furnace gas. In order to do so, the blast furnace gas must be used as a high-calorie gas that can be used alone. Accordingly, in the first embodiment, carbon dioxide and nitrogen are separated and removed from the blast furnace gas. In such a case, the heating value varies with the ratio of removing carbon dioxide and nitrogen but carbon dioxide and nitrogen are preferably removed such that a heating value of a 1060 kcal/Nm³ or higher can be obtained. The heating value of the reformed blast furnace gas is preferably as high as possible and carbon dioxide and nitrogen are more preferably removed so that a heating value of 1500 kcal/Nm³ or higher can be obtained. The upper limit of the heating value is about 2950 kcal/Nm³ in view of the composition of the blast furnace gas.

It is also possible to mix coke oven gas or converter gas within the range (e.g., the range of the amount that has been conventionally used) allowable in the steelworks to further increase the heating value of the reformed blast furnace gas.

In the first embodiment, there is no need to specify the method for separating and removing carbon dioxide and nitrogen in the blast furnace gas discharged from the blast furnace top. Carbon dioxide and nitrogen may be separated and removed by a chemical absorption method, a physical absorption method, a membrane separation method, an adsorption method, or any other method. Examples of the method for separating carbon dioxide include an amine method, a membrane separation method, and a PSA method. Examples of the method for separating nitrogen include a membrane separation method and a PSA method. However, carbon dioxide and nitrogen are not separated and removed at the same time but through two-stage separation, i.e., one is removed after the other has been removed. The energy source, such as motive power needed for separating carbon dioxide and nitrogen from the blast furnace gas, is preferably the energy recovered from the exhaust heat of steelworks, such as cooling water of a blast furnace body, cooling water of a converter exhaust gas, exhaust gas from a heating furnace, or the like, from the viewpoint of energy conservation and reduction of the amount of carbon dioxide generated. As for the separation of carbon dioxide, the amine method is advantageous for large-scale facilities since separation can be achieved at a lower cost compared to other methods and at a larger scale. However, since simultaneous separation of nitrogen is not possible, a two-stage separation structure is employed and nitrogen separation is conducted at the second stage. According to the membrane separation method and the PSA method, the separation characteristics differ depending on the material used; thus, the separation ratios improve and the loss of the combustible gas components decreases when a two-stage separation structure is employed. Accordingly, the carbon dioxide separation at the first stage is preferably conducted by an amine method, which is less expensive and suitable for large-scale facilities, or a PSA method, which has a good record in small-medium size facilities and is capable of processing at a low cost, and the nitrogen separation at the second stage is preferably conducted by the PSA method. Separation and removal of carbon dioxide and nitrogen are to be conducted so that the heating value of the reformed blast furnace gas after the separation and removal is 1060 kcal/Nm³ or more and more preferably 1500 kcal/Nm³ or more, as mentioned earlier. The upper limit of the heating value is about 2950 kcal/Nm³ in view of the composition of the blast furnace gas.

The reformed blast furnace gas manufactured by separating and removing carbon dioxide and nitrogen from the blast furnace gas can be effectively used as a fuel gas for various heating furnaces, a fuel gas for hot-blast stoves, a fuel gas for coke ovens, and fuel gas for power generation, for example.

In the first embodiment, the blast furnace gas discharged from the blast furnace top is recovered, and carbon dioxide and nitrogen is separated and removed from the recovered blast furnace gas; however, when air is injected from the tuyere provided in the lower part of the blast furnace, about 55 vol% of nitrogen is contained in the discharged blast furnace gas and the amount of the blast furnace gas generated increases due to the high nitrogen content. In order to suppress the increase in cost for subjecting large quantities of blast furnace gas to the separation treatment and cost for separating nitrogen contained therein in large quantities, oxygen-enriched air containing 25 vol% or more of oxygen is injected into the blast furnace through the tuyere in the first embodiment to decrease the amount of nitrogen contained in the blast furnace gas and reduce the amount of the blast furnace gas generated. In injecting the oxygen-enriched air, oxygen in an amount equal to the amount of oxygen injected when air is injected may be injected; thus, the amount of injection is small compared to when air is injected. Note that in order to decrease the amount of nitrogen contained in the blast furnace gas, the oxygen concentration in the oxygen-enriched air is preferably as high as possible, i.e., preferably 30 vol% or more and more preferably 35 vol% or more of oxygen is contained. The oxygen concentration is preferably 96 vol% or less considering the cost for manufacturing oxygen. An oxygen concentration of about 70 vol% is sufficient in view of the blast furnace operation. Naturally, pure oxygen may be used considering the demand and supply balance in the steelworks. However, in order to increase the oxygen concentration to 96% or higher by separation of air, argon must be separated in addition to nitrogen and the energy for separation is needed.

Nitrogen in the air injected into the blast furnace does not contribute to reactions and is discharged from the furnace top while maintaining the amount supplied. Accordingly, when oxygen-enriched air is injected into the blast furnace, nitrogen content in the blast furnace gas decreases due to the decrease in nitrogen content compared to air and the amount of blast furnace gas generated decreases. As a result, the amount of the blast furnace gas subjected to the separation treatment decreases, and the nitrogen concentration in the discharged blast furnace gas decreases, thereby rendering separation of carbon dioxide and nitrogen more efficient.

Note that during the blast furnace operation in which a blast furnace gas having a nitrogen concentration of 54 vol% is discharged, the nitrogen content in the blast furnace gas is about 48 vol% when oxygen-enriched air having an oxygen concentration of 25 vol% is injected instead of air, thereby reducing about 20 vol% of the nitrogen content. When oxygen-enriched air having an oxygen concentration of 30 vol% is injected instead of air, the nitrogen content in the blast furnace gas is about 42 vol%, thereby reducing about 38 vol% of the nitrogen content. When oxygen-enriched air having an oxygen concentration of 35 vol% is injected instead of air, the nitrogen content in the blast furnace gas is about 36 vol%, thereby reducing about 50 vol% of the nitrogen content. When oxygen-enriched air having an oxygen concentration of 50 vol% is injected, the nitrogen content in the blast furnace gas is about 24 vol%.

In the first embodiment, the reason for injecting the oxygen-enriched air having an oxygen concentration of 25 vol% is to significantly reduce the nitrogen content in the discharged blast furnace gas, as described above.

A cryogenic separator, a membrane separator, a rotary oxygen-enriched air manufacturing device, or the like can be used in the method for making the oxygen-enriched air, and any method may be used. However, in order to manufacture oxygen-enriched air having a relatively low oxygen concentration, i.e., up to about an oxygen concentration of 50 vol%, a rotary oxygen-enriched air manufacturing device that can manufacture oxygen-enriched air at low cost while saving energy is preferably employed. The cryogenic separator is suited to mass production but is not suitable for manufacturing oxygen-enriched air with a low oxygen concentration in view of the cost.

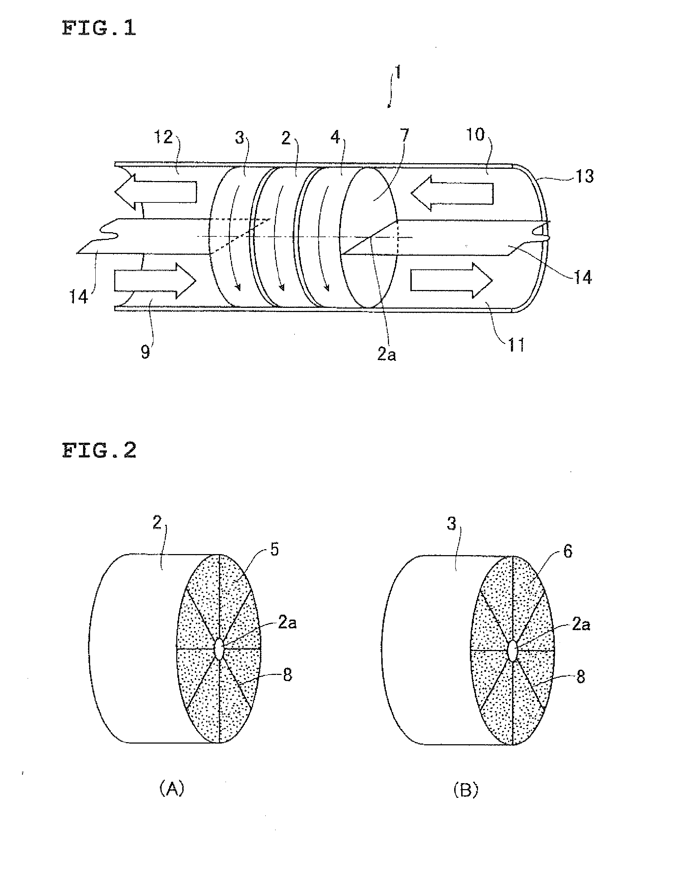

The rotary oxygen-enriched air manufacturing device will now be described. Fig. 1 is a schematic perspective view of a rotary oxygen-enriched air manufacturing device used in the first embodiment. Fig. 2 includes schematic perspective views of a first cylindrical container and a second cylindrical container forming part of the rotary oxygen-enriched air manufacturing device shown in Fig. 1. Fig. 2A shows the first cylindrical container and Fig. 2B shows the second cylindrical container.

As shown in Fig. 1 a first cylindrical container 2 which can be rotated by a motor (not shown) about a center axis 2a is disposed inside a tubular body 13, and a second cylindrical container 3 and a third cylindrical container 4 are arranged to sandwich the first cylindrical container 2 while opposing each other in the center axis 2a direction. The second cylindrical container 3 and the third cylindrical container 4 have their center axis directions coinciding with the center axis 2a of the first cylindrical container 2 and can be rotated by a motor (not shown) about the center axis 2a. In such a case, the first to third cylindrical containers may be rotated by the same motor or by individual motors. When they are rotated using individual motors, the number of rotations may be different from one another. Moreover, although the direction of rotation is the same in Fig. 1, the containers may be rotated in different directions.

As shown in Fig. 2A, the interior of the first cylindrical container 2 is partitioned into a plurality of chambers by partition plates 8 radially extending from the center axis 2a and each of the chambers is filled with a nitrogen-absorbing adsorbent 5 surrounded with a mesh or net (not shown). Alternatively, honey-comb structures having surfaces coated with the nitrogen-absorbing adsorbent 5 may be disposed in the chambers formed by partitioning. Zeolite is preferably used as the nitrogen-absorbing adsorbent 5 for its high nitrogen absorbing capacity. Zeolite is a crystalline inorganic oxide and more specifically a crystalline microporous substance constituted by crystalline silicate, crystalline aluminosilicate, crystalline metallosilicate, crystalline aluminophosphate, crystalline metalloaluminophosphate, or the like. The partition plates 8 also function as reinforcing members for securing the stiffness of the first cylindrical container 2.

The internal structure of the second cylindrical container 3 is the same as the internal structure of the first cylindrical container 2, as shown in Fig. 2B. A moisture-absorbing adsorbent 6 fills each of the chambers partitioned by the partition plates 8 while being surrounded with a mesh, a net, or the like. Alternatively, honey-comb structures having surfaces coated with the moisture-absorbing adsorbent 6 may be disposed in the chambers formed by partitioning. Although not shown in the drawing, the internal structure of the third cylindrical container 4 is also identical to that of the second cylindrical container 3, and a moisture-absorbing adsorbent 7 fills each of the chambers partitioned by the partition plates 8. A commonly used moisture-absorbing adsorbent such as silica gel can be used as the moisture-absorbing adsorbent 6 and the moisture-absorbing adsorbent 7.

Separation plates 14 that sandwich the first cylindrical container 2, the second cylindrical container 3, and the third cylindrical container 4 are disposed inside the tubular body 13 at a position that passes through the center line of the tubular body 13, and form two channels inside the tubular body 13. In other words, in Fig. 1, air supplied to a first air supply channel 9 on the lower left side passes through the second cylindrical container 3, the first cylindrical container 2, and the third cylindrical container 4 in that order, and is discharged to a first air exhaust channel 11 on the lower right side. In other hand, in Fig. 1, air supplied to a second air supply channel 10 on the upper right side passes through the third cylindrical container 4, the first cylindrical container 2, and the second cylindrical container 3, in that order, and is discharged to a second air exhaust channel 12 on the upper left side.

In this rotary oxygen-enriched air manufacturing device 1, it is essential that airs be supplied in opposing directions. However, the first cylindrical container 2, the second cylindrical container 3, and the third cylindrical container 4 are continuously or intermittently rotated about the center axis 2a and thus not all of air supplied through the first air supply channel 9 is discharged through the first air exhaust channel 11. Similarly, not all of air supplied through the second air supply channel 10 is discharged through the second air exhaust channel 12. Part of air becomes mixed with one another. However, in the rotary oxygen-enriched air manufacturing device 1, mixing of part of air is not considered.

The first air supply channel 9, the second air supply channel 10, the first air exhaust channel 11, and the second air exhaust channel 12 are respectively connected by piping (not shown). Air is supplied to the first air supply channel 9 and the second air supply channel 10 through these piping and air discharged from the first air exhaust channel 11 and the second air exhaust channel 12 is guided to particular places through these piping.

The rotary oxygen-enriched air manufacturing device 1 having such a structure is used to manufacture oxygen-enriched air from air as below.

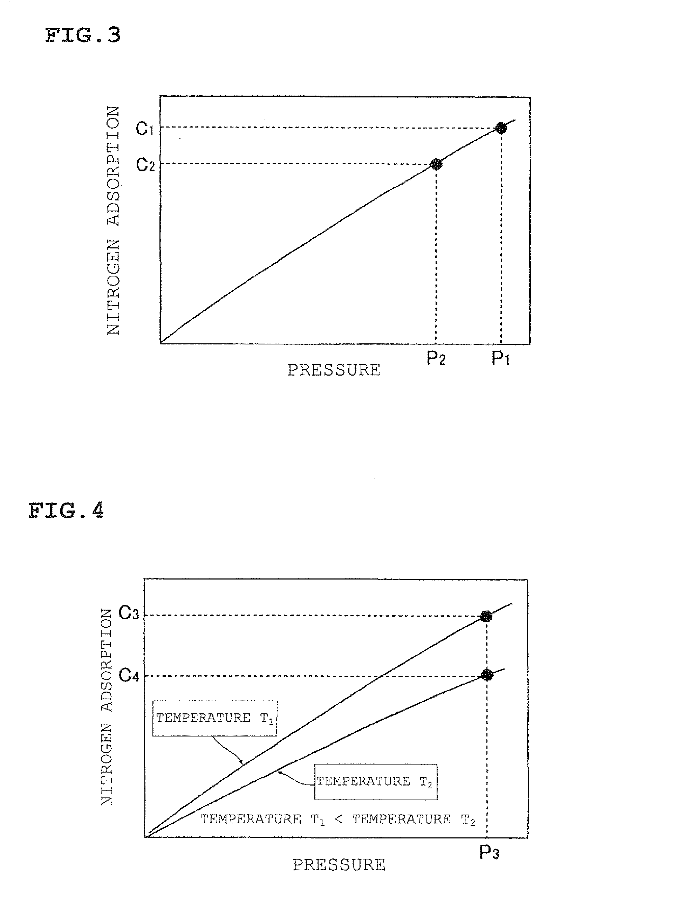

First, the nitrogen adsorption capacity of zeolite used as the nitrogen-absorbing adsorbent 5 is described. Fig. 3 is a graph qualitatively showing the relationship between the nitrogen adsorption of zeolite and pressure. Fig. 4 is a graph qualitatively showing the relationship between the nitrogen adsorption of zeolite, pressure, and temperature.

As shown in Fig. 3, the nitrogen adsorption of zeolite increases with the pressure. When zeolite is contacted with air in an atmosphere with a pressure P₁, zeolite adsorbs nitrogen until the adsorption reaches a C₁ value. As a result, nitrogen in air decreases, thereby enriching oxygen by an amount corresponding to the amount of nitrogen decreased. At a pressure P₂, the nitrogen adsorption of zeolite drops to a C₂ value and thus zeolite that has adsorbed nitrogen to the C₁ value releases nitrogen once brought into contact with air having a pressure P₂. As a result, the adsorption of zeolite decreases from the C₁ value to the C₂ value. The nitrogen content in the air to which nitrogen is released increases, thereby achieving nitrogen enrichment.

In other words, when zeolite is brought into contact with airs having different pressures, oxygen enrichment of air having a relatively high pressure is achieved and nitrogen enrichment of air having a relatively low pressure is achieved depending on the difference in the nitrogen adsorption determined by the difference in pressure. When zeolite is alternately brought into contact with airs having different pressures, zeolite repeats adsorption and release of nitrogen and oxygen enrichment continues semi permanently with the nitrogen adsorption not remaining in a saturated state.

As shown in Fig. 4, the nitrogen adsorption of zeolite also varies with temperature. The nitrogen adsorption increases with the decrease in temperature even when the pressure is constant. In other words, when zeolite is brought into contact with air having a temperature T₁ lower than a temperature T₂ at a constant pressure P₃, zeolite absorbs nitrogen until the adsorption reaches the C₃ value. As a result, nitrogen in air decreases, thereby enriching oxygen by an amount corresponding to the amount of nitrogen decreased. At a temperature T₂, the nitrogen adsorption of zeolite drops to a C₄ value and thus zeolite that has adsorbed nitrogen releases nitrogen once brought into contact with air having a temperature T₂. As a result, the adsorption of zeolite decreases from the C₃ value to the C₄ value. The nitrogen content in the air to which nitrogen is released increases, thereby achieving nitrogen enrichment.

In other words, when zeolite is brought into contact with airs having different temperatures, oxygen enrichment of air having a relatively low temperature is achieved and nitrogen enrichment of air having a relatively high temperature is achieved depending on the difference in the nitrogen adsorption determined by the difference in temperature. When zeolite is alternately brought into contact with airs having different temperatures, zeolite repeats adsorption and release of nitrogen and oxygen enrichment continues semi permanently with the nitrogen adsorption not remaining in a saturated state.

In this case, as can be inferred from Fig. 4, the difference in nitrogen adsorption of zeolite increases by increasing the pressure and decreasing the temperature of the air to be oxygen-enriched, and the oxygen enrichment can be efficiently conducted.

Next, a method for manufacturing oxygen-enriched air from air by using such a nitrogen adsorption capacity of zeolite is described.

That is, referring to Fig. 1, while continuously or intermittently rotating the first cylindrical container 2, the second cylindrical container 3, and the third cylindrical container 4 about the center axis 2a, the pressure of air supplied from the first air supply channel 9 is adjusted to be higher than the pressure of air supplied from the second air supply channel 10, the temperature of air supplied from the first air supply channel 9 is adjusted to be lower than the temperature of air supplied from the second air supply channel 10, or the pressure of the air supplied from the first air supply channel 9 is increased and the temperature decreased compared to air supplied from the second air supply channel 10 in order to supply airs from the first air supply channel 9 and the second air supply channel 10. The pressures of the airs supplied can be adjusted by controlling the discharge pressure of blowers for delivering the airs, and the temperatures of the airs supplied can be adjusted by providing heaters to feed piping, for example.

The air supplied from the first air supply channel 9 is brought into contact with the moisture-absorbing adsorbent 6 disposed in the second cylindrical container 3 to remove moisture (referred to as "demoisturizing treatment"), and the demoisturized air is brought into contact with the nitrogen-absorbing adsorbent 5 disposed in the first cylindrical container 2. Since the air supplied from the first air supply channel 9 has a high pressure, a low temperature, or a high pressure and a low temperature compared to the air supplied from the second air supply channel 10, nitrogen is adsorbed by the nitrogen-absorbing adsorbent 5 composed of zeolite or the like, the amount of nitrogen is reduced, and oxygen enrichment is achieved (referred to as "denitrification treatment"). The denitrification treatment is also called "oxygen enrichment treatment".

Air supplied from the second air supply channel 10 is brought into contact with the moisture-absorbing adsorbent 7 disposed in the third cylindrical container 4 to conduct demoisturizing treatment, and the demoisturized air flows into the first cylindrical container 2 and is brought into contact with the nitrogen-absorbing adsorbent 5 disposed in the first cylindrical container 2. The air supplied from the second air supply channel 10 has a low pressure, a high temperature, or a low pressure and a high temperature compared to the air supplied from the first air supply channel 9. Thus, the nitrogen adsorption of the nitrogen-absorbing adsorbent 5 composed of zeolite or the like decreases as it contacts this air and nitrogen corresponding to the difference in nitrogen adsorption is released to the air supplied from the second air supply channel 10. As a result, the nitrogen concentration in the air supplied from the second air supply channel 10 increases (referred to as "nitrogen enrichment treatment"). In this manner, the nitrogen-absorbing adsorbent 5 continues adsorption and release of nitrogen with the nitrogen adsorption not remaining in a saturated state.

Subsequently, the nitrogen-enriched air supplied from the second air supply channel 10 flows into the second cylindrical container 3 and is brought into contact with the moisture-absorbing adsorbent 6. The moisture-absorbing adsorbent 6 adsorbs moisture contained in the air supplied from the first air supply channel 9 as it contacts this air. However, the air supplied from the second air supply channel 10 is dry air from which moisture has already been removed by the moisture-absorbing adsorbent 7 disposed in the third cylindrical container 4. Thus, the moisture adsorbed onto the moisture-absorbing adsorbent 6 is released to the air supplied from the second air supply channel 10, thereby increasing the moisture concentration in the air (referred to as "moisture-enrichment treatment"). In other words, the moisture-absorbing adsorbent 6 continues adsorption and release of moisture with the moisture adsorption not remaining in a saturated state.

Similarly, the denitrified or oxygen-enriched air supplied from the first air supply channel 9 flows into the third cylindrical container 4 and is brought into contact with the moisture-absorbing adsorbent 7. The moisture-absorbing adsorbent 7 adsorbs moisture contained in the air supplied from the second air supply channel 10 as it contacts this air. However, the air supplied from the first air supply channel 9 is dry air from which moisture has already been removed by the moisture-absorbing adsorbent 6 disposed in the second cylindrical container 3. Thus, the moisture adsorbed onto the moisture-absorbing adsorbent 7 is released to the air supplied from the first air supply channel 9. In other words, the moisture-absorbing adsorbent 7 also continues adsorption and release of moisture with the moisture adsorption not remaining in a saturated state.

The numbers of rotations of the first cylindrical container 2, the second cylindrical container 3, and the third cylindrical container 4 may be set according to the adsorption capacities of the adsorbents so that each container rotates 180 degrees (half turn) before the adsorption of the corresponding adsorbent reaches the saturation adsorption.

As described above, according to the rotary oxygen-enriched air manufacturing device 1 suitable for the first embodiment, because the moisture-absorbing adsorbent 6 and the moisture-absorbing adsorbent 7 are disposed at the two sides of the nitrogen-absorbing adsorbent 5 and airs are supplied in opposite directions relative to the adsorbents, dry air is constantly supplied to the nitrogen-absorbing adsorbent 5 in the opposite directions. The nitrogen-absorbing adsorbent 5 remains unaffected by the moisture, absorbs nitrogen from the supplied air, and releases absorbed nitrogen to air supplied from the opposite side. Moreover, the moisture-absorbing adsorbent 6 and the moisture-absorbing adsorbent 7 repeat adsorption and release of moisture in an alternating manner. As a result, the nitrogen-absorbing adsorbent 5, the moisture-absorbing adsorbent 6, and the moisture-absorbing adsorbent 7 continue making oxygen-enriched air over a long time while the adsorption does not remain in a saturated state, which is an excellent feature.

In the rotary oxygen-enriched air manufacturing device 1 described above, the nitrogen-absorbing adsorbent 5, the moisture-absorbing adsorbent 6, and the moisture-absorbing adsorbent 7 are respectively disposed in separate cylindrical containers. Alternatively, one cylindrical container may be provided and the moisture-absorbing adsorbent 6, the nitrogen-absorbing adsorbent 5, and the moisture-absorbing adsorbent 7 may be disposed inside that cylindrical container in that order. Although the cylindrical containers are disposed inside the tubular body 13 and the air channels are disposed inside the tubular body 13, only the cylindrical containers may be disposed inside the tubular body 13 and the air channels may be formed as independent piping.

When oxygen-enriched air is manufactured as such by using the rotary oxygen-enriched air manufacturing device 1, the electric power consumption rate can be significantly reduced compared to when oxygen-enriched air is manufactured by making pure oxygen with a cryogenic separator and mixing pure oxygen with air.

As described above, according to the first embodiment, since the blast furnace operation is conducted by injecting oxygen-enriched air having an oxygen concentration of 25 vol% or more into the blast furnace, the nitrogen content in the blast furnace gas generated is decreased. As a result, the amount of blast furnace gas generated is decreased due to the decrease in the nitrogen content, the amount of blast furnace gas subjected to treatments is decreased, and the amount of nitrogen to be separated and removed is decreased. Accordingly, it becomes possible to efficiently separate and remove nitrogen and carbon dioxide from the blast furnace gas at low cost. Since carbon dioxide and nitrogen are removed from the blast furnace gas, a reformed blast furnace gas having a heating value of 2000 kcal/Nm³ or more, which is at least twice that of conventional blast furnace gas, can be obtained, and the effective utilization of blast furnace gas is promoted.

### Second Embodiment

A method for separating a blast furnace gas according to a second embodiment includes manufacturing a reformed blast furnace gas having a high heating value compared to a blast furnace gas by separating and removing CO₂ and N₂ from the blast furnace gas discharged from a furnace top, and injecting the reformed blast furnace gas to recycle.

According to the second embodiment, since CO₂ and N₂ are removed from the blast furnace gas, a reformed blast furnace gas having a heating value of 1060 kcal/Nm³ or more (preferably 1500 kcal/Nm³ or more and more preferably 2000 kcal/Nm³ or more), which is at least twice that of conventional blast furnace gas, can be obtained. When the reformed blast furnace gas is injected into the blast furnace, the reformed blast furnace gas functions as a reducing agent and the amount of feed of the reducing agent, i.e., coke or pulverized coal, can be reduced correspondingly. Moreover, when the reformed blast furnace gas is used as a fuel gas for a heating furnace or a soaking furnace, the amount exhaust gas after combustion is decreased, the heat taken out of the system through the exhaust gas is decreased, and the amount of fuel used can be reduced. When the reformed blast furnace gas is injected into a blast furnace or used as a fuel gas in a heating furnace or a soaking furnace, the amount of the reducing agent or the fuel gas newly used can be reduced and the amount of CO₂ generated in the steelworks can thereby be reduced. Accordingly, the second embodiments brings useful effects environmentally and industrially.

The second embodiment will now be described in specific detail.

The gas components and the heating values when CO₂ and N₂ are separated and removed from the blast furnace gas are first described. Table 2 shows the gas components and heating values of a gas obtained by removing only CO₂ from a blast furnace gas containing 4.4 vol% H₂, 49.9 vol% N₂, 23.6 vol% CO, and 22.1 vol% CO₂ and a gas obtained by removing CO₂ and N₂ from the same blast furnace gas. Calculation was based on the assumption that 90% of CO₂ and 90% of N₂ can be removed (CO₂: 22.1 vol% → 2.2 vol%, N₂: 49.9 vol% → 5.0 vol%). The volume ratio is the ratio of the volume when the volume of the blast furnace gas is assumed to be 1.0.

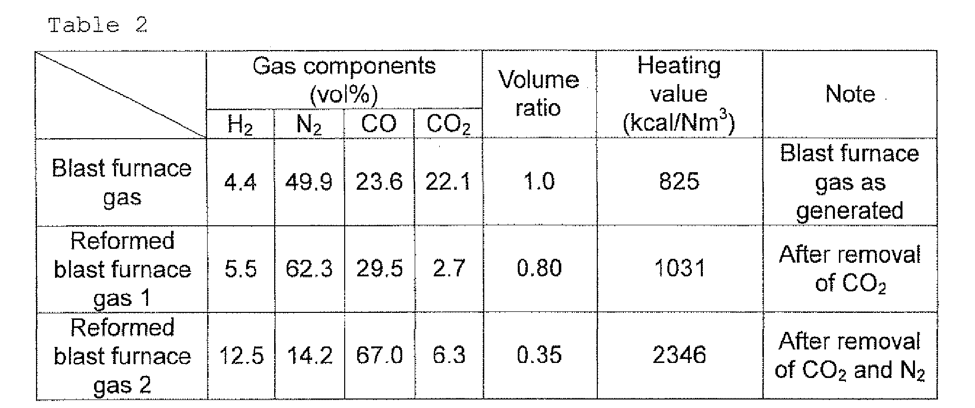

As shown in Table 2, the heating value of the blast furnace gas as generated is 825 kcal/Nm³. When only CO₂ is removed from the blast furnace gas, the increase in the combustible gas component is only about 7 vol% and the total amount of the combustible gas components is only about 35 vol%. The heating value is 1031 kcal/Nm³ and the increase in the heating value is small. In contrast, when both CO₂ and N₂ are separated and removed, the total amount of the combustible gas components reaches about 80 vol% and the heating value increases to 2346 kcal/Nm³.

An object of the present invention is to reduce the consumption of the high-calorie by-product gas for carbureting the blast furnace gas. In order to do so, the blast furnace gas must be used as a high-calorie gas that can be used alone. Accordingly, the presumption of the present invention is to make use of a high-calorie reformed blast furnace gas obtained by separating and removing CO₂ and N₂ from a blast furnace gas. In such a case, the heating value varies with the ratio of removing CO₂ and N₂ but CO₂ and N₂ are preferably removed such that a heating value of a 2000 kcal/Nm³ or higher can be obtained.

In other words, the present invention features manufacturing a reformed blast furnace gas having a high heating value compared to a blast furnace gas by separating and removing CO₂ and N₂ from a blast furnace gas and recycling the reformed blast furnace gas by injecting the reformed blast furnace gas into a blast furnace or using the reformed blast furnace gas as a fuel gas for at least one selected from a heating furnace, a soaking furnace, an annealing furnace, and a holding furnace.

In the present invention, there is no need to specify the method for separating and removing CO₂ and N₂ from the blast furnace gas discharged from the blast furnace top. Examples of the method for separating CO₂ include an amine method, a membrane separation method, and a PSA method. Examples of the method for separating N₂ include a membrane separation method and a PSA method. However, CO₂ and N₂ are preferably not separated and removed at the same time but through two-stage separation, i.e., one is removed after the other has been removed. The energy source, such as motive power needed for separating CO₂ and N₂ from the blast furnace gas, is preferably the energy recovered from the exhaust heat of steelworks, such as cooling water of a blast furnace body, cooling water of a converter exhaust gas, exhaust gas from a heating furnace, or the like, from the viewpoint of energy conservation and reduction of the amount of CO₂ generated.

As for the separation of CO₂, the amine method is advantageous for large-scale facilities since separation can be achieved at a lower cost compared to other methods and at a larger scale. However, since simultaneous separation of N₂ is not possible, a two-stage separation structure is employed and N₂ separation is conducted at the second stage. According to the membrane separation method and the PSA method, the separation characteristics differ depending on the material used; thus, the separation ratios improve and the loss of the combustible gas components decreases when a two-stage separation structure is employed. Accordingly, the CO₂ separation at the first stage is preferably conducted by an amine method, which is less expensive and suitable for large-scale facilities, or a PSA method, which has a good record in small-medium size facilities and is capable of processing at a low cost, and the N₂ separation at the second stage is preferably conducted by the PSA method.

In the present invention, the reformed blast furnace gas manufactured by removing CO₂ and N₂ from the blast furnace gas is recycled by injecting the reformed blast furnace gas into the blast furnace or using the reformed blast furnace gas as a fuel gas in a heating furnace, a soaking furnace, an annealing furnace, or a holding furnace. The case in which the reformed blast furnace gas is recycled and used in a blast furnace is first described.

In a blast furnace, iron ore, which is a main raw material, coke, which is a reducing agent and a fuel, and limestone, which is a fluxing agent, are charged from the furnace top and hot air heated to 1000°C or higher is injected through the tuyere provided in the lower side wall to reduce iron ore and manufacture molten iron. In some cases, heavy oil serving as a fuel is injected through the tuyere but in recent years it has become common practice to inject inexpensive pulverized coal. Hot air is usually enriched with 1 to 2 vol% of oxygen.

As the iron ore descends the interior of the furnace, the iron ore is heated with the combustion heat from the coke and hot air and reduced by CO generated by combustion of coke and pulverized coal. This reduction reaction can be represented by "FeOn + nCO → Fe + nCO₂" and is called "indirect reduction". Reduction also proceeds as the iron ore directly reacts with the coke or pulverized coal. This reduction reaction can be represented by "FeOn + nC → Fe + nCO" and is called "direct Reduction".

In the present invention, a reformed blast furnace gas from which CO₂ and N₂ are removed is injected into the furnace from the tuyere along with hot air. The reformed blast furnace gas contains CO as a main component and about 10 vol% of H₂ and reduces the iron ore by CO and H₂ in the reformed blast furnace gas. Accordingly, the amount of reducing agent equivalent to the amount of the reformed blast furnace gas fed, i.e., the amount of pulverized coal injected from the tuyere, can be reduced. Coke also functions as a reducing agent but also has an effect of securing air permeability in the furnace. Thus, care must be taken in reducing the amount of coke. The reformed blast furnace gas is preferably heated to about 1000°C before fed into the furnace as with the hot air to increase the thermal efficiency of the blast furnace.

The amount of hot air supplied to the furnace must be reduced by the amount corresponding to the amount of hot air needed to burn the reducing agent such as pulverized coal; hence, the amount of hot air supplied to the furnace is reduced according to the decrease in the amount of the reducing agent, such as pulverized coal, supplied. This reduces motive power for delivering hot air. Moreover, since the amount of hot air supplied to the furnace is reduced, the N₂ content in the blast furnace gas discharged from the furnace top is reduced and the heating value of the discharged blast furnace gas is increased. The discharged blast furnace gas is recovered, CO₂ and N₂ in the recovered blast furnace gas are separated and removed, and the resulting reformed blast furnace gas is injected into the blast furnace through the tuyere to achieve recycling.

According to this mode of operation, use of pulverized coal is no longer necessary and the amount of CO₂ generated can be reduced thereby. For example, in a blast furnace that uses coke and pulverized coal as a reducing agent and a fuel where and the pulverized coal content is about 20 mass%, about 30% of CO₂ discharged from the blast furnace can be reduced by recycling the reformed blast furnace gas from which CO₂ and N₂ are removed.

The case in which the reformed blast furnace gas is used as a fuel gas in a heating furnace, a soaking furnace, an annealing furnace, or a holding furnace is described next. In this case, the heating value of the reformed blast furnace gas used is preferably 2000 kcal/Nm³ or more.

When the heating value of the reformed blast furnace gas is 2000 kcal/Nm³ or more, purchased fuels such as LPG and LNG or high-calorie by-product gas (coke oven gas, converter gas, etc.) for carburetion is not needed and only the reformed blast furnace gas is used as a fuel gas for a heating furnace, a soaking furnace, an annealing furnace, or a holding furnace. In such a case, an apparatus that has been using a mixture of a blast furnace gas and a coke oven gas or the like can also be used without changing the specifications of the apparatus by simply switching the fuel gas.

When the reformed blast furnace gas is used as a fuel gas for a heating furnace, a soaking furnace, an annealing furnace, or a holding furnace, the heat (exhaust heat) taken out of the system by CO₂ and N₂ contained in the fuel gas decreases, and the amount of the fuel gas used for heating is reduced. As a result, the CO₂ emission from a heating furnace, a soaking furnace, an annealing furnace, a holding furnace, or the like, can be reduced.

As described above, the present invention reduces not only the amount of CO₂ generated in steelworks but also the amount of pulverized coal and fuel gas, thereby bringing advantageous effects both environmentally and industrially.

### Third Embodiment

A gas obtained by mixing blast furnace gas and coke oven gas and/or converter gas is called mixed gas or M gas. It should be noted that the amount of blast furnace gas generated in steelworks is significantly larger than the amounts of other by-product gases and the reason for using the blast furnace gas as a mixed gas is to make an efficient use of this blast furnace gas.

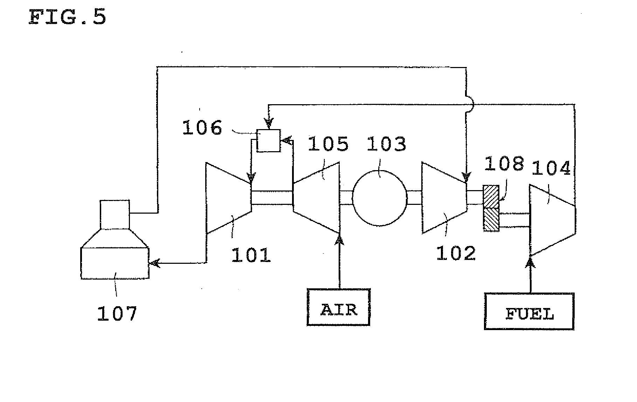

Fig. 5 shows an example of a gas turbine combined power generation facility that uses the mixed gas as a fuel gas. In Fig. 5, reference numeral 101 represents a gas turbine, 102 represents a steam turbine, 103 represents a power generator, 104 represents a fuel gas compressor, 105 represents an air compressor, 106 represents a burner, 107 represents an exhaust gas boiler, and 108 represents a transmission constituted by two gears. As shown in Fig. 5, the gas turbine combined power generation facility includes the gas turbine 101, the steam turbine 102, and the power generator 103 arranged on the same axis. The gas turbine combined power generation facility has a higher power generation efficiency that conventional steam turbine power generation facilities and thus is widely employed in the intergraded steel manufacturing plants and waste incineration plants.

According to the gas turbine combined power generation facility, a high-temperature, high-pressure fuel gas discharged from the fuel gas compressor 104 and high-temperature, high-pressure air discharged from the air compressor 105 are guided into the burner 106 to burn and generate a high-temperature, high-pressure combustion gas. The high-temperature, high-pressure combustion gas is guided into the gas turbine 101 to rotate the gas turbine 101 and to thereby rotate the power generator 103 to generate power. The exhaust gas from the gas turbine 101 is guided to the exhaust gas boiler 107 to generate steam and the steam is supplied to the steam turbine 102 to rotate the steam turbine 102 and to rotate the power generator 103 to generate power. That is, in this facility, power is generated by rotating the power generator 103 by the high-temperature, high-pressure combustion gas generated by combustion of the fuel gas and by rotating the power generator 3 by steam generated by using exhaust gas of the combustion gas.

An objective of the third embodiment is to provide a method for operating a gas turbine combined power generation facility that generates power by burning by-product gas generated in steelworks and that can improve the power generation efficiency compared to related art and to provide an optimum energy operation method in steelworks when a gas turbine combined power generation facility with higher power generation efficiency is used to supply electric power in the steelworks.

A method for operating a gas turbine combined power generation facility according to the third embodiment that achieves the above-described objective includes manufacturing a reformed blast furnace gas having a higher heating value than a blast furnace gas by separating and removing carbon dioxide and nitrogen from the blast furnace gas discharged from a furnace top, guiding the reformed blast furnace gas serving as a fuel gas into a fuel gas compressor of the gas turbine combined power generation facility, and burning the reformed blast furnace gas with a burner of the gas turbine combined power generation facility to generate power.

According to the third embodiment, since the reformed blast furnace gas from which inert gas components are separated and removed and which has a higher heating value than the blast furnace gas is used as a fuel gas of the gas turbine combined power generation facility, the motive power of the fuel gas compressor of the gas turbine combined power generation facility can be reduced and the power generation can be increased by an amount equivalent to this reduction of the motive power. Thus, the power generation efficiency can be significantly enhanced compared to related art. Since the power generation efficiency of the gas turbine combined power generation facility increases, the power needed in steelworks can be covered solely by the power generated from the gas turbine combined power generation facility and thus reduction of carbon dioxide is promoted by effective use of excess power.

The third embodiment will now be described in specific detail.

Studies are conducted to increase the power generation efficiency of a gas turbine combined power generation facility that uses by-product gas generated in steelworks as a fuel gas and it has been found that mixed gas which has been used as a fuel gas and which contains by-product gas has a low heating value and thus the load on the fuel gas compressor of the gas turbine combined power generation facility is large, resulting in consumption of significantly large motive power. It has also been found that the load on the fuel gas compressor is decreased by increasing the heating value of the fuel gas, the motive power can be reduced as a result, and the amount of generated power can be increased by the amount corresponding to the reduction of the motive power.

Thus, studies have been directed to increasing the heating value of the fuel gas used in the gas turbine combined power generation facility. As mentioned earlier, of by-product gases generated in steelworks, a coke gas and a converter gas have a heating value about three times or more that of a blast furnace gas. Although the objectives can be easily achieved by using the coke oven gas and the converter gas alone, the usage of the blast furnace gas which is generated in the largest quantity is not secured and the blast furnace gas is wasted, which is a problem. Moreover, the heating value of the mixed gas can be increased by increasing the blend ratio of the coke oven gas and the converter gas and correspondingly decreasing the blend ratio of the blast furnace gas in the mixed gas. However, the amounts of the coke oven gas and the converter gas generated are limited, and the coke oven gas and converter gas have been used for carbureting the blast furnace gas in a steel heating furnace in the downstream of the steelworks and thus are not available in excess.

Considering these factors, in the third embodiment, a reformed blast furnace gas obtained by separating and removing inert gas components from a blast furnace gas is used as a fuel gas of a gas turbine combined power generation facility.

Table 3 shows the gas components and the heating values of a gas (reformed blast furnace gas 1) obtained by completely removing only carbon dioxide from a blast furnace gas containing 4.4 vol% hydrogen (hereinafter also referred to as "H₂"), 49.9 vol% nitrogen (hereinafter also referred to as "N₂"), 23.6 vol% carbon monoxide (hereinafter also referred to as "CO"), and 22.1 vol% carbon dioxide (hereinafter also referred to as "CO₂"), and a gas (reformed blast furnace gas 2) obtained by removing carbon dioxide and nitrogen from the same blast furnace gas. Calculation was based on the assumption that 90% of carbon dioxide and 90% of nitrogen in the reformed blast furnace gas 2 can be removed (CO₂: 22.1 vol% → 2.2 vol%, N₂: 49.9 vol% → 5.0 vol%). The volume ratio is the ratio of the volume when the volume of the blast furnace gas is assumed to be 1.0.

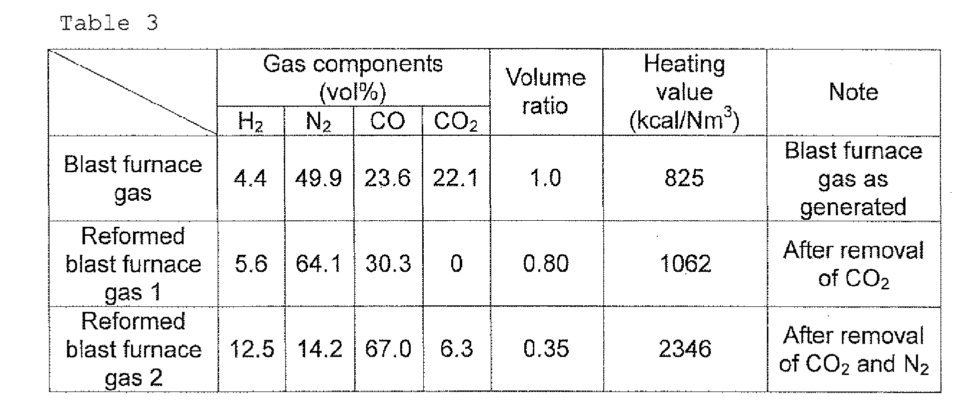

As shown in Table 3, the heating value of the blast furnace gas as generated is 825 kcal/Nm³. When only carbon dioxide is completely removed from the blast furnace gas (reformed blast furnace gas 1), the increase in the combustible gas component is only about 8 vol% and the total amount of the combustible gas components is only about 36 vol%. The heating value is 1062 kcal/Nm³ and the increase in the heating value is small. In contrast, when 90% of both carbon dioxide and nitrogen are separated and removed (reformed blast furnace gas 2), the total amount of the combustible gas components reaches about 80 vol% and the heating value increases to 2346 kcal/Nm³.

These results show that when only carbon dioxide is separated and removed, the results are not much different from conventional operation of the gas turbine combined power generation facility and improvements are small. Accordingly, in the third embodiment, a high-calorie reformed blast furnace gas obtained by separating and removing carbon dioxide and nitrogen from a blast furnace gas is used as a fuel gas of the gas turbine combined power generation facility. In such a case, the heating value varies with the ratio of removing carbon dioxide and nitrogen. However, in order to increase the power generation efficiency, carbon dioxide and nitrogen are preferably removed such that a heating value of a 1060 kcal/Nm³ or higher can be obtained. The heating value of the reformed blast furnace gas is preferably as high as possible and carbon dioxide and nitrogen are more preferably removed so that a heating value of 1500 kcal/Nm³ or higher can be obtained.

It is also possible to mix a coke oven gas or a converter gas within the range (e.g., the range of the amount that has been conventionally used) allowable in the steelworks to further increase the heating value of the reformed blast furnace gas. This is also within the scope of the third embodiment.

The third embodiment is based on the results of these studies and includes manufacturing a reformed blast furnace gas having a higher heating value than a blast furnace gas by separating and removing carbon dioxide and nitrogen from the blast furnace gas discharged from a furnace top, guiding the reformed blast furnace gas serving as a fuel gas into a fuel gas compressor of the gas turbine combined power generation facility, and burning the reformed blast furnace gas with a burner of the gas turbine combined power generation facility to generate power.

In the third embodiment, there is no need to specify the method for separating and removing carbon dioxide and nitrogen from the blast furnace gas discharged from the blast furnace top. Examples of the method for separating carbon dioxide include an amine method, a membrane separation method, and a PSA method. Examples of the method for separating nitrogen include a membrane separation method and a PSA method. However, carbon dioxide and nitrogen are not separated and removed at the same time but through two-stage separation, i.e., one is removed after the other has been removed. The energy source, such as motive power needed for separating carbon dioxide and nitrogen from the blast furnace gas, is preferably the energy recovered from the exhaust heat of steelworks, such as cooling water of a blast furnace body, cooling water of a converter exhaust gas, exhaust gas from a heating furnace, or the like, from the viewpoint of energy conservation and reduction of the amount of carbon dioxide generated. According to the third embodiment, the power generation efficiency of the gas turbine combined power generation facility can be improved and generation of excess power can be expected. The excess power can be used to separate carbon dioxide and nitrogen from the blast furnace gas.

As for the separation of carbon dioxide, the amine method is advantageous for large-scale facilities since separation can be achieved at a lower cost compared to other methods and at a larger scale. However, since simultaneous separation of nitrogen is not possible, a two-stage separation structure is employed and nitrogen separation is conducted at the second stage. According to the membrane separation method and the PSA method, the separation characteristics differ depending on the material used; thus, the separation ratios improve and the loss of the combustible gas components decreases when a two-stage separation structure is employed. Accordingly, the carbon dioxide separation at the first stage is preferably conducted by an amine method, which is less expensive and suitable for large-scale facilities, or a PSA method, which has a good record in small-medium size facilities and is capable of processing at a low cost, and the nitrogen separation at the second stage is preferably conducted by the PSA method. Separation and removal of carbon dioxide and nitrogen are to be conducted so that the heating value of the reformed blast furnace gas after the separation and removal is 1060 kcal/Nm³ or more and more preferably 1500 kcal/Nm³ or more, as mentioned earlier.

The reformed blast furnace gas manufactured by separating and removing carbon dioxide and nitrogen from the blast furnace gas is used as a fuel gas of the gas turbine combined power generation facility. The method for operating the gas turbine combined power generation facility will now be described with reference to Fig. 5. Fig. 5 is a schematic diagram showing the structure of a gas turbine combined power generation facility that implements the third embodiment.

The reformed blast furnace gas serving as a fuel gas is introduced into the fuel gas compressor 104 and the temperature and pressure of the reformed blast furnace gas are increased by the fuel gas compressor 104. The high-temperature, high-pressure reformed blast furnace gas is then supplied to the burner 106. Air for combustion is introduced into the air compressor 105 to obtain high-temperature, high-pressure air by the air compressor 105. The high-temperature, high-pressure air is supplied to the burner 106. The high-temperature, high-pressure reformed blast furnace gas is burned with the burner 106 using high-temperature, high-pressure air, and a high-temperature, high-pressure combustion gas is generated thereby. The combustion gas is guided into the gas turbine 1 to rotate the gas turbine 1 and to thereby rotate the power generator 103 to generate power.

The exhaust gas from the gas turbine 1 is guided to the exhaust gas boiler 107 to generate steam and the steam is supplied to the steam turbine 102 to rotate the steam turbine 102 and to rotate the power generator 103 to generate power.

The gas turbine 101, the steam turbine 102, the power generator 103, and the air compressor 105 of the gas turbine combined power generation facility are arranged on the same axis and thus power is generated efficiently. According to the third embodiment, since a reformed blast furnace gas having an increased heating value is used as the fuel gas, i.e., since the reformed blast furnace gas from which inert gas components have been separated and removed is used, the motive power which has been needed for increasing the temperature and pressure of the inert gas components in the fuel gas compressor 104 in the conventional practice of using mixed gas as a fuel gas is no longer needed, the motive power is reduced as a result, and the power generation is increased.

In a 300-mW gas turbine combined power generation facility, the reduction of the motive power in the fuel gas compressor 104 is as much as 40 MW or more, thereby increasing the power generation by 10% or more. The fuel gas compressor 104 is not arranged on the same axis as the gas turbine 1, the steam turbine 102, the power generator 103, etc., and is connected through the transmission 108. Thus, the amount of motive power used in the fuel gas compressor 104 can be easily adjusted by controlling the transmission 108.

As described above, according to the third embodiment, since a reformed blast furnace gas from which inert gas components have been separated and removed and which has a high heating value is used as a fuel gas of a gas turbine combined power generation facility, the amount of motive power of the fuel gas compressor of the gas turbine combined power generation facility is reduced and the power generation can be increased by the amount equivalent to this reduction in the motive power.

In the third embodiment, the reformed blast furnace gas obtained by separating and removing carbon dioxide and nitrogen from the blast furnace gas is used as a fuel gas of the gas turbine combined power generation facility. In order to increase the efficiency of separating carbon dioxide and nitrogen, oxygen-enriched air is preferably injected into the blast furnace instead of air to reduce the nitrogen content in the blast furnace gas and decrease the amount of blast furnace gas generated.

That is, in the third embodiment, the blast furnace gas discharged from the blast furnace top is recovered, and carbon dioxide and nitrogen is separated and removed from the recovered blast furnace gas; however, when air is injected from the pyrene provide in the lower part of the blast furnace, about 55 vol% of nitrogen is contained in the discharged blast furnace gas and the amount of the blast furnace gas generated increases due to the high nitrogen content. In order to suppress the increase in cost for subjecting large quantities of blast furnace gas to the separation treatment and cost for separating nitrogen contained therein in large quantities, oxygen-enriched air containing, for example, 30 vol% or more of oxygen is preferably injected into the blast furnace through the pyrene in the third embodiment to decrease the amount of nitrogen contained in the blast furnace gas and reduce the amount of the blast furnace gas generated. In injecting the oxygen-enriched air, oxygen in an amount equal to the amount of oxygen injected when air is injected may be injected; thus, the amount of injection is small compared to when air is injected.

Nitrogen in the air injected into the blast furnace does not contribute to reactions and is discharged from the furnace top while maintaining the amount supplied. Accordingly, when oxygen-enriched air is injected into the blast furnace, the nitrogen content in the blast furnace gas decreases due to the decrease in nitrogen content compared to air and the amount of blast furnace gas generated decreases. As a result, the amount of the blast furnace gas subjected to the separation treatment decreases, and the nitrogen concentration in the discharged blast furnace gas decreases, thereby rendering separation of carbon dioxide and nitrogen more efficient.

Note that during the blast furnace operation in which a blast furnace gas having a nitrogen concentration of 54 vol% is discharged, the nitrogen content in the blast furnace gas is about 42 vol% when oxygen-enriched air having an oxygen concentration of 30 vol% is injected instead of air, thereby reducing about 38 vol% of nitrogen. When oxygen-enriched air having an oxygen concentration of 50 vol% is injected, the nitrogen content in the blast furnace is about 24 vol%. In the third embodiment, the reason for injecting the oxygen-enriched air is to significantly reduce the nitrogen content in the discharged blast furnace gas, as described above.

A cryogenic separator, a membrane separator, a rotary oxygen-enriched air manufacturing device, or the like can be used in the method for making the oxygen-enriched air, and any method may be used. However, in order to manufacture oxygen-enriched air having a relatively low oxygen concentration, i.e., up to about an oxygen concentration of 40 vol%, a rotary oxygen-enriched air manufacturing device that can manufacture oxygen-enriched air at low cost while saving energy is preferably employed. The cryogenic separator is suited to mass production but is not suitable for manufacturing oxygen-enriched air with a low oxygen concentration in view of the cost.

When oxygen-enriched air is manufactured by using the rotary oxygen-enriched air manufacturing device, the electric power consumption rate can be significantly reduced compared to when oxygen-enriched air is manufactured by making pure oxygen with a cryogenic separator and mixing pure oxygen with air.

When the third embodiment is implemented, the power generation efficiency of the gas turbine combined power generation facility improves. According to the studies conducted by the inventors of the present invention, the power generation efficiency improves significantly when a steel heating furnace at the downstream of the steelworks uses a blast furnace gas along with coke oven gas and converter gas for carbureting the blast furnace gas as has been conventionally practiced and when a reformed blast furnace gas obtained by separating and removing carbon dioxide and nitrogen from the rest of blast furnace gas is used as a fuel gas of a gas turbine combined power generation facility to generate power. It has been found that the amount of power generated is well above the amount of power consumed in the facilities of the steelworks. In other words, it has been found that the power needed by the facilities of the steelworks can be sufficiently covered solely by the amount of power generated from the gas turbine combined power generation facility that uses a reformed blast furnace gas as a fuel gas according to the third embodiment.

As for the effective use of excess power, the excess power is preferably used to store CO₂ underground as means for preventing recent global warming or used as power for melting iron scraps in an electric furnace. Note that although molten iron manufactured by reducing iron ore in a blast furnace and iron scraps are usually used as the iron source, the manufacture of the molten iron in a blast furnace involves a large amount of energy for reducing and melting the iron ore. In contrast, iron scraps require only the melting heat. Thus, when iron scraps are used, energy reduction by the amount used for thermally reducing the iron ore can be achieved, i.e., energy conservation and CO₂ reduction can be achieved.

It is also possible to inject the blast furnace gas equivalent to the heating value of the reformed blast furnace gas needed to generate excess power or the reformed blast furnace gas into the blast furnace so as to serve as a reducing agent instead of generating excess power. The blast furnace gas and the reformed blast furnace gas contain carbon monoxide and hydrogen which serve as reducing agents for iron ore.

That is, in a blast furnace, iron ore, which is a main raw material, coke, which is a reducing agent and a fuel, and limestone, which is a fluxing agent are charged from the furnace top and hot air heated to 1000°C or higher is injected through the tuyere provided in the lower side wall to reduce iron ore and manufacture molten iron. As the iron ore descends the interior of the furnace, the iron ore is heated with the combustion heat from the coke and hot air and reduced by CO generated by combustion of coke and pulverized coal. This reduction reaction can be represented by "FeOn + nCO → Fe + nCO₂" and is called "indirect reduction". Reduction also proceeds as the iron ore directly reacts with the coke or pulverized coal. This reduction reaction can be represented by "FeOn + nC → Fe + nCO" and is called "direct reduction".

When the reformed blast furnace gas or the blast furnace gas is injected into the furnace from tuyere along with hot air, CO and H₂ contained in the reformed blast furnace gas or the blast furnace gas reduce the iron ore. Thus, the amount of the reducing agent equivalent to the amount of reformed blast furnace gas and the blast furnace gas supplied can be reduced. In this case, the reformed blast furnace gas and the blast furnace gas are preferably heated to about 500°C or more before they are fed into the furnace as with the hot air to increase the thermal efficiency of the blast furnace.

When a high-heating-value blast furnace gas is used with priority in a heating facility of the steelworks, the coke oven gas for adjusting the heating value of the fuel need not be used as munch. Thus, this excess coke oven gas can also be injected into the blasting furnace.

### Example 1

The amounts of power generated from a 300 MW-scale gas turbine combined power generation facility shown in Fig. 1 were compared between when a reformed blast furnace gas 2 (heating value: 2346 kcal/Nm³) which is shown in Table 1 above and from which 90% of both carbon dioxide and nitrogen were separated and removed was used as a fuel gas (an example of third embodiment) and when a mixed gas (heating value: 1050 kcal/Nm³, blend ratio of coke oven gas: 6.6 vol%) of a blast furnace gas having a heating value of 825 kcal/Nm³ and a coke oven gas having a heating value of 4250 kcal/Nm³ is used as the fuel gas (conventional example).

As a result, as shown in Table 4, in the invention example, the motive power of the fuel gas compressor was reduced by 30 MW compared to the conventional example and thus an increase in power generation equivalent to 30 MW was obtained. As a result, the power generation efficiency improved from 49% to 53% and efficient power generation was achieved.

**Table 4**

| | Fuel gas | | Motive power of fuel gas compressor | Power generation | Power generation efficiency |
|---|---|---|---|---|---|
| | Type | Heating value | | | |
| Invention example | Reformed blast furnace gas 2 | 2346 kcal/Nm³ | 53 MW | 330 MW | 53% |
| Conventional example | Mixed gas | 1050 kcal/Nm³ | 83 MW | 300 MW | 49% |

### Example 2

The results of investigation when the third embodiment is applied to steelworks having an annual crude steel production of 10 million tons are described. As for the preconditions of the investigation, the by-product gases generated in the steelworks were used as usual in a steel heating furnace at the downstream of the steelworks, and the remaining blast furnace gas was modified into a reformed blast furnace gas 2 shown in Table 1 above to use as a fuel gas of a gas turbine combined power generation facility. The power generation efficiency of the gas turbine combined power generation facility was estimated to be low, i.e., about 50%, considering the variation in the amount of blast furnace gas generated by changes in blast furnace operation. Naturally, no purchased energy such as LNG or LPG was used. The energy balance of the steelworks is shown in Table 5. Table 5 also shows the energy balance of the steelworks equipped with a conventional power generator that generates power with steam turbines as a comparative example. The power generation efficiency of the conventional power generator was assumed to be 37% based on the record.

**Table 5**

| | | | Invention example | Comparative example, |
|---|---|---|---|---|
| Annual crude steel production | | | 10 million ton | 10 million ton |
| Amount of reducing agent injected annually | | | 4T.8 trillion kcal | 47.8 trillion kcal |
| Derails of heat evolved annually | Heat of reduction reaction | | 16.5 trillion kcal | 16.5 trillion fecal |
| | Heat dissipation from furnace body | | 9.6 trillion kcal | 9.6 trillion kcal |
| | By-product gases | Coke oven gas | 7.8 trillion kcal | 7.8 trillion kcal |
| | | Blast furnace gas | 12.2 trillion kcal | 12.2 trillion local |
| | | Converter gas | 1.7trillion kcal | 1.7trillion kcal |
| | | Subtotal | 21.7 trillion kcal | 21.7 trillion kcal |
| | Total | | 47.8 trillion kcal | 47.8 trillion kcal |
| Details of where by-product gases are used | Heating furnace etc., in the plant | | 12.2 trillion kcal | 12.2 trillion kcal |
| | Power generator | | 9.5 trillion kcal | 9.5 trillion kcal |
| Power generator | Type | | Gas turbine combined | Steam turbine |
| | Power generation efficiency | | 50% | 37% |
| Annual power balance | Power generation (A) | | 5.52 billion kWh | 4.09 billion kWh |
| | Consumption in the plant (B) | | 4.43 billion kWh | 4.43 billion kWh |
| | Excess and deficiency ((A) -(B)) | | +1.09 billion kWh | -0.34 billion kWh |

The energy injected in the steelworks is a educing agent composed of coking coal and coke and 47.8 trillion (10¹²) kcal of reducing agent is injected annually for a crude steel production of 10 million tons/year. The reducing agent generates, as by-product gases, 7.8 trillion kcal of coke oven gas, 12.2 trillion kcal of blast furnace gas and 1.7 trillion kcal of converter gas and these by-product gases are recovered. Of the energy injected into the steelworks, the reaction heat for reduction is 16.5 trillion kcal and the heat dissipation from furnace bodies such as a blast furnace and a converter is 9.6 trillion kcal. These heat are not recovered as the energy.

According to a record, of the recovered by-product gases, 12.2 trillion kcal worth of by-product gases are used in a steel heating furnace and the like at the downstream of the steelworks and thus 9.5 trillion kcal worth of by-product gases are supplied to the power generator both in the invention example and the comparative example.

In the invention example, carbon dioxide and nitrogen were removed from the total amount of the blast furnace gas worth 9.5 trillion kcal to manufacture a reformed blast furnace gas and the reformed blast furnace gas was used as a fuel gas of a gas turbine combined power generation facility. As a result, the power generation efficiency was 50% and 5.52 billion kWh of electric power was obtained annually. Since the annual power consumption in the steelworks is 4.43 billion kWh according to a record, about 1.09 billion kWh of power was annually generated in excess.

It has been found that this excess power can be used to store CO₂ underground or melt iron scraps in an electric furnace. It has also been found that when no excess power is generated, the blast furnace gas that could be used to generate excess power remains unused and thus this blast furnace gas or a reformed blast furnace gas obtained by reforming the blast furnace gas can be used as a reducing gas and injected into the blast furnace. In contrast, according to the comparative example, although 9.5 trillion kcal worth of a mixed gas of the blast furnace gas and the coke oven gas was supplied to the power generator of a steam turbine type, the power generation efficiency of the power generator was 37%. Although the same amount of energy as the invention example was injected, only 4.09 billion kWh of power was obtained annually, 0.34 billion kWh power was deficient annually, and a corresponding amount of power had to be purchased from outside.

## Claims

1. A method for separating a blast furnace gas, comprising the steps of:
producing oxygen-enriched air having an oxygen concentration of at least 25 vol%;
blowing the oxygen-enriched air into a blast furnace through tuyeres provided in a lower part of the blast furnace; and
generating a reformed blast furnace gas by separating and removing carbon dioxide and nitrogen in a blast furnace gas discharged from a blast furnace top.

2. The method according to claim 1, wherein the oxygen-enriched air has an oxygen concentration of 25 to 96 vol%.

3. The method according to claim 1, wherein the reformed blast furnace gas has a heating value of 1060 to 2950 kcal/Nm³.

4. The method according to claim 1, wherein
the oxygen-enriched air has an oxygen concentration of 25 to 96 vol%, and
the reformed blast furnace gas has a heating value of 1060 to 2950 kcal/Nm³.

5. The method according to claim 1, wherein
the step of generating the oxygen-enriched air comprises:
preparing a cylindrical container that is rotatable about a center axis and contains a nitrogen-absorbing adsorbent having a nitrogen adsorption that increases with an increase in pressure or a decrease in temperature;
supplying dry airs having different pressures and temperatures to the nitrogen-absorbing adsorbent, the dry airs being supplied in directions opposite to each other;
conducting a denitrification treatment on an air having a relatively high pressure or a relatively low temperature; and
conducting nitrogen enrichment on an air having a relatively low pressure or a relatively high temperature,
thereby conducting oxygen enrichment on the air having the relatively high pressure or the relatively low temperature.

6. The method according to claim 1, wherein the step of generating the reformed blast furnace gas comprises:
separating and removing carbon dioxide by an amine method, and
separating and removing nitrogen by a PSA method.

7. The method according to claim 1, wherein the step of generating the reformed blast furnace gas comprises:
separating and removing carbon dioxide by a PSA method,
and
separating and removing nitrogen by a PSA method.

8. The method according to claim 1, wherein the step of generating the reformed blast furnace gas comprises using exhaust heat from steelworks to separate and remove carbon dioxide and nitrogen in the blast furnace gas discharged from the blast furnace top.

9. The method according to Claim 1, further comprising the step of using the reformed blast furnace gas as a fuel gas for at least one selected from the group consisting of a heating furnace, a soaking furnace, an annealing furnace, and a holding furnace.

10. The method according to claim 1, further comprising the steps of:
using the reformed blast furnace gas as a fuel gas for at least one selected from the group consisting of a heating furnace, a soaking furnace, an annealing furnace, and a holding furnace; and
injecting a coke oven gas into the blast furnace.

11. The method according to claim 1, further comprising the step of performing recycling by injecting the reformed blast furnace gas into the blast furnace.

12. The method according to claim 1, further comprising the step of introducing the reformed blast furnace gas serving as a fuel gas into a fuel gas compressor of a gas turbine combined power generation facility and burning the reformed blast furnace gas with a burner of the gas turbine combined power generation facility to generate power.

13. The method according to claim 1, further comprising the steps of:
introducing the reformed blast furnace gas serving as a fuel gas into a fuel gas compressor of a gas turbine combined power generation facility and burning the reformed blast furnace gas with a burner of the gas turbine combined power generation facility to generate power,
wherein the step of generating the reformed blast furnace gas comprises using exhaust heat of steelworks by utilizing power obtained by an operation method of the gas turbine combined power generation facility so as to separate and remove carbon dioxide and nitrogen in the blast furnace gas discharged from the blast furnace top.

14. The method according to claim 12, further comprising the step of supplying power generated by an operation method of the gas turbine combined power generation facility to facilities of steelworks and using excess power to store carbon dioxide underground or melt iron scraps.

15. The method according to claim 12, further comprising:
supplying power generated by an operation method of the gas turbine combined power generation facility to facilities of steelworks, stopping generation of power corresponding to excess power, and injecting into the blast furnace the reformed blast furnace gas or a blast furnace gas having an equivalent heating value to the reformed blast furnace gas needed to generate the excess power.

16. A method for separating a blast furnace gas, comprising the steps of:
generating a reformed blast furnace gas by separating and removing carbon dioxide and nitrogen in a blast furnace gas discharged from a blast furnace top; and
performing recycling by injecting the reformed blast furnace gas into a blast furnace.

17. A method for separating a blast furnace gas, comprising the steps of:
generating a reformed blast furnace gas by separating and removing carbon dioxide and nitrogen in a blast furnace gas discharged from a blast furnace top; and
introducing the reformed blast furnace gas serving as a fuel gas into a fuel gas compressor of a gas turbine combined power generation facility and burning the reformed blast furnace gas with a burner of the gas turbine combined power generation facility to generate power.
